# FASCICULE DE BREVET EUROPEEN

(11) **EP 3 393 742 B1**
(45) Date de publication et mention de la délivrance du brevet: **20.07.2022**
(21) Numéro de dépôt: 16826418.2
(22) Date de dépôt: 20.12.2016
(51) Int. Cl.: B29C 43/24, B29D 30/00, B29C 43/50, B29L 30/00, B29C 43/46

(54) **CALANDRE COMPRENANT UN ROULEAU ÉQUIPÉ DE FRETTES LATÉRALES**
KALANDER UMFASSEND EINE ROLLE MIT SEITLICHEN VORSPRÜNGEN
CALENDER COMPRISING A ROLLER EQUIPPED WITH LATERAL PROTRUSIONS

(30) Priorité: 23.12.2015 FR 1563242
(43) Date de publication de la demande: 31.10.2018
(73) Titulaire: Compagnie Générale des Etablissements Michelin, 63000 Clermont-Ferrand (FR)
(72) Inventeur: URBAIN, Quentin, 63040 Clermont-Ferrand Cedex 9 (FR); GOUTEYRON, Sylvain, 63040 Clermont-Ferrand Cedex 9 (FR); EGERSZEGI, Christophe, 63040 Clermont-Ferrand Cedex 9 (FR)
(74) Mandataire: Roussy, Delphine
(86) Numéro de dépôt international: PCT/FR2016/053583
(87) Numéro de publication internationale: WO 2017/109391

(56) Documents cités:
- US-A- 3 969 458
- US-A- 5 513 560
- US-A1- 2014 035 188

## Description

L'invention se situe dans le domaine de la fabrication d'enveloppes de pneumatiques, et plus généralement dans le domaine du profilage de mélanges caoutchouteux.

Lors de l'assemblage d'une ébauche d'une enveloppe de pneumatique, on assemble différents composants dont différents tronçons caoutchouteux découpés dans des profilés stockés par enroulement sur des bobines. Les différents tronçons assemblés ayant différentes fonctions et différentes positions dans la future enveloppe, les différents profilés dont ils sont issus sont réalisés dans différents mélanges caoutchouteux. L'ébauche assemblée à partir de ces différents tronçons devant subir une étape de vulcanisation pour être transformée en enveloppe de pneumatique, les mélanges caoutchouteux dans lesquels sont réalisés ces profilés sont des mélanges crus, c'est-à-dire non vulcanisés. Par conséquent, les mélanges à profiler sont relativement malléables mais ils présentent aussi en contrepartie un certain collant qui peut s'avérer problématique lors du profilage ainsi que lors du stockage des profilés ainsi réalisés.

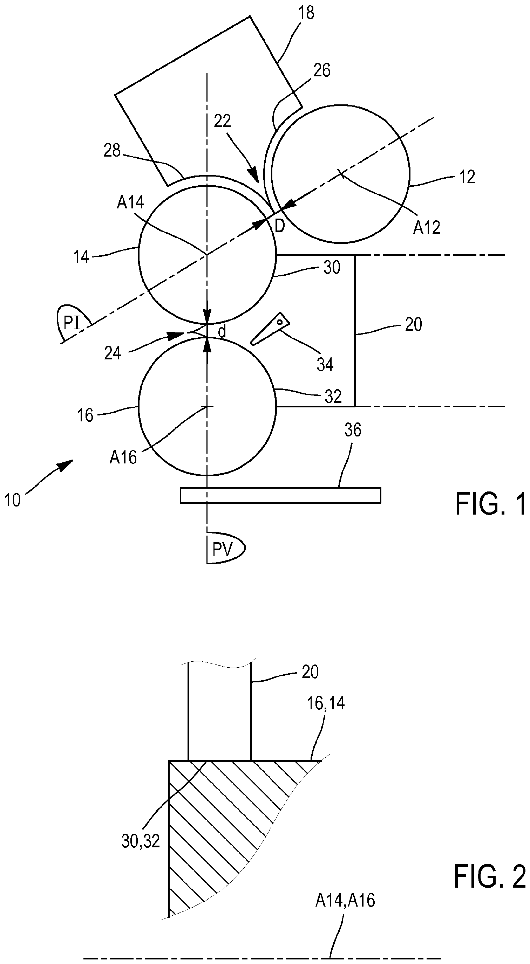

Les mélanges crus sont obtenus à l'aide de différents outils, y compris les solutions divulguées, par exemple, par les brevets US 3,969,458 et US 5,513,560 et par la publication US 2014/0035188. Si les mélanges crus sont obtenus à l'aide de différents outils dont des mélangeurs discontinus et/ou continus et des outils à cylindre, l'opération de profilage de ces mélanges crus est généralement réalisée à l'aide d'une calandre telle qu'illustrée en figure 1.

Selon l'art antérieur, une telle calandre 10 comprend trois rouleaux rotatifs disposés de façon que l'axe de rotation A12 du rouleau supérieur 12 se situe au-dessus de l'axe de rotation A14 du rouleau intermédiaire 14 et de façon que l'axe de rotation A14 du rouleau intermédiaire se situe au-dessus de l'axe de rotation A16 du rouleau inférieur 16, ces trois axes de rotation étant parallèles. Plus précisément, l'axe de rotation A16 du rouleau inférieur 16 et l'axe de rotation A14 du rouleau intermédiaire 14 se situent dans un même plan vertical PV, tandis que l'axe de rotation A12 du rouleau supérieur 12 se situe dans un plan incliné PI de 60° par rapport au plan vertical PV.

Le rouleau supérieur 12 et le rouleau intermédiaire 14 sont séparés par une première distance D dans le plan incliné PI, cette première distance D définissant la hauteur d'un premier interstice de profilage 22. Le rouleau intermédiaire 14 et le rouleau inférieur 16 sont séparés par une seconde distance d dans le plan vertical PV, cette seconde distance définissant la hauteur d'un second interstice de profilage 24 et cette seconde distance d déterminant l'épaisseur finale du profilé. De préférence, cette seconde distance d est inférieure à la première distance D afin de s'assurer que le mélange remplisse entièrement le second interstice 24 lors de la mise en œuvre du profilage avec la calandre 10.

En complément de ces trois rouleaux, la calandre 10 comprend aussi une paire d'oreilles supérieures 18 et une paire d'oreilles intermédiaires 20. Les oreilles supérieures 18 se situent aux extrémités transversales des rouleaux supérieur 12 et intermédiaire 14, et les oreilles intermédiaires 20 se situent aux extrémités transversales des rouleaux intermédiaire 14 et inférieur 16.

Plus en détail, les oreilles supérieures 18 accompagnent le mélange à profiler vers le premier interstice 22 sur le quart de la circonférence des rouleaux supérieur et intermédiaire située en amont de ce premier interstice 22, et les oreilles intermédiaires 20 accompagnent le mélange à profiler vers le second interstice 24 sur le quart de la circonférence des rouleaux intermédiaire et inférieur située en amont de ce second interstice 24. A cet effet, les oreilles supérieures 18 comprennent deux portées 26,28 en quart de cercle se rejoignant au niveau du premier interstice de profilage 22 et épousant respectivement les parois extérieures P12,P14 du rouleau supérieur 12 et du rouleau intermédiaire 14, et les oreilles intermédiaires 20 comprennent deux portées 30,32 en quart de cercle se rejoignant au-delà du second interstice de profilage 24 et épousant respectivement les parois extérieures P14,P16 du rouleau intermédiaire 14 et du rouleau inférieur 16.

Les oreilles supérieures 18 ne servant qu'au guidage du mélange vers le premier interstice de profilage 22 et à la formation d'un premier bourrelet de mélange en amont de ce premier interstice de profilage 22, les portées 26,28 de ces oreilles supérieures ne sont pas en contact avec les rouleaux supérieur 12 et intermédiaire 14. A l'inverse, les oreilles intermédiaires 20 servant au guidage du mélange vers le second interstice de profilage 24 et à profiler ce mélange sur les bords latéraux du profilé en cours de réalisation, les portées 30,32 de ces oreilles intermédiaires 20 viennent au contact, au jeu de fonctionnement près, des rouleaux intermédiaire 14 et inférieur 16, comme le montre la vue de détail en figure 2.

En vue de la formation et de la mesure d'un second bourrelet de mélange en amont du second interstice de profilage 24, la calandre comprend des moyens de retenue 34 du mélange positionnés en amont de ce second interstice de profilage 24 et entre les oreilles intermédiaires 20. Ces moyens de retenue 34 prennent habituellement la forme de doigts presseurs prévus en face de la partie centrale du second interstice de profilage 24.

Enfin, pour assurer l'évacuation du mélange profilé sortant du second interstice de profilage 24, un tapis d'évacuation 36 est prévu sous le rouleau inférieur 16.

Si une telle calandre 10 a permis de profiler la plupart des mélanges caoutchouteux utilisés jusqu'à aujourd'hui dans la fabrication d'enveloppes de pneumatiques, des difficultés sont apparues avec des mélanges caoutchouteux plus récents. En effet, en raison de leur nouvelle composition, ces mélanges récents sont moins malléables et les profilés réalisés à partir de ces mélanges récents avec une calandre 10 selon l'art antérieur présentent des défauts d'aspect.

Selon un premier défaut d'aspect, les bords latéraux des profilés sortant de la calandre 10 ne sont pas réguliers dans l'épaisseur et dans la largeur des profilés.

Selon un autre défaut d'aspect, les profilés sortant de la calandre 10 présentent des défauts de cohésion se traduisant par l'apparition de craquelures et de fissures.

Les défauts d'aspect au niveau des bords latéraux doivent être évités car ils confèrent une section transversale irrégulière aux profilés et aux bandes découpées dans la longueur de ces profilés, ce qui pose des problèmes de stockage et de quantification de la masse linéique de ces profilés et des bandes découpées dans ces profilés.

Les défauts de cohésion doivent être évités car ils sont susceptibles d'entraîner des déchirements des bandes découpées dans ces profilés lorsque ces bandes sont empilées et repliées sur elles-mêmes en vue de leur stockage et/ou de leur transport vers un site de fabrication d'enveloppes de pneumatiques, et lorsque ces bandes sont désempilées.

Aussi, la présente invention a pour objectif de parer à au moins l'un des inconvénients identifiés dans l'art antérieur et de répondre aux besoins industriels précités.

A cet effet, l'invention a pour objet une calandre selon la revendication 1.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue schématique de côté d'une calandre selon l'art antérieur,
- la figure 2 est une vue schématique de détail de l'interface entre une oreille et un rouleau d'une calandre selon l'antérieur,
- la figure 3 est une vue en perspective arrière d'une calandre selon l'invention,
- la figure 4 est une vue de face d'une calandre selon l'invention dépouillée de certains de ses équipements,
- la figure 5 est une vue schématique de côté d'une calandre selon l'invention avec une première variante de montage des frettes latérales et une première variante d'une table de décollement du mélange profilé,
- la figure 5A est une vue schématique de détail de la figure 5 illustrant une première variante des frettes latérales selon l'invention,
- la figure 6 est une vue schématique de côté d'une calandre selon l'invention avec une seconde variante de montage des frettes latérales et une seconde variante d'une table de décollement du mélange profilé,
- la figure 6A est une vue schématique de détail de la figure 6 illustrant une seconde variante des frettes latérales selon l'invention,
- la figure 7 est une vue de face en contreplongée d'une calandre selon l'invention, et
- la figure 8 est une vue de côté d'une calandre selon l'invention dépouillée de certains de ses équipements.

L'invention est relative à une calandre 110 de profilage d'un mélange caoutchouteux destiné à la fabrication d'enveloppes de pneumatique.

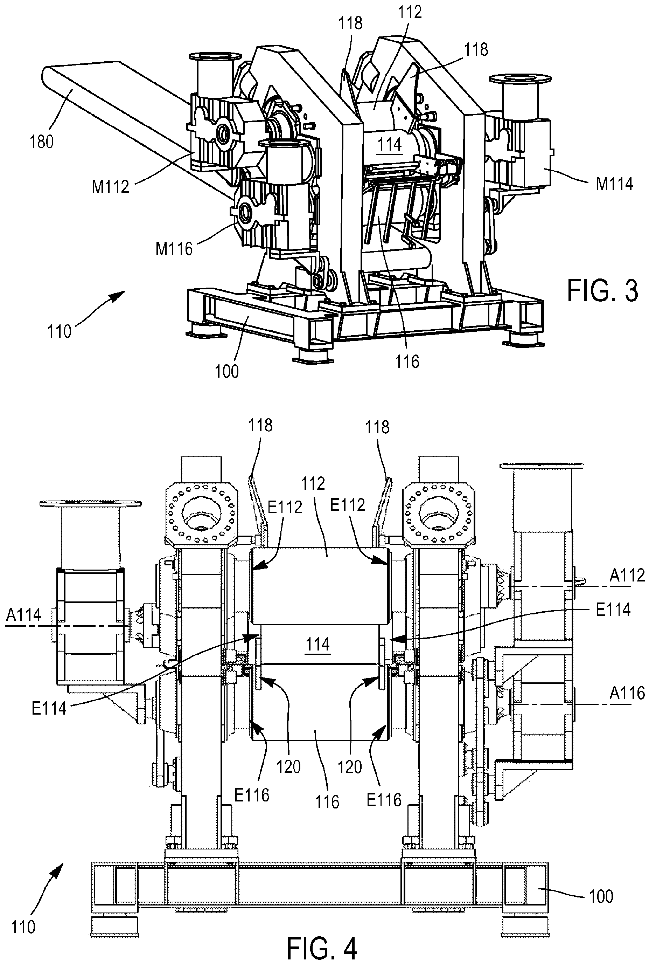

Comme l'illustrent les figures 3 à 6, la calandre 110 comprend trois rouleaux rotatifs disposés de façon que l'axe de rotation A112 du rouleau supérieur 112 se situe au-dessus de l'axe de rotation A114 du rouleau intermédiaire 114 et de façon que l'axe de rotation A114 du rouleau intermédiaire se situe au-dessus de l'axe de rotation A116 du rouleau inférieur 116. Ces trois axes de rotation A112,A114,A116 sont parallèles. L'axe de rotation A116 du rouleau inférieur 116 et l'axe de rotation A114 du rouleau intermédiaire 114 se situent dans un même plan vertical PV1. L'axe de rotation A112 du rouleau supérieur 112 se situe dans un plan incliné PI1, de préférence de 60°, par rapport au plan vertical PV1.

En vue de la mise en œuvre du profilage, chaque rouleau 112, 114, 116 est entraîné en rotation par un motoréducteur M112,M114,M116. Lors du profilage, le rouleau intermédiaire 114 tourne en sens inverse du rouleau supérieur 112, et le rouleau inférieur 116 tourne en sens inverse du rouleau intermédiaire 114. La calandre 110 comprend un bâti 100 supportant les rouleaux 112, 114, 116, les motoréducteurs M112,M114,M116 et tous les autres équipements et composants de la calandre 110.

En vue du profilage du mélange caoutchouteux, le rouleau supérieur 112 et le rouleau intermédiaire 114 sont séparés par une première distance D1 dans le plan incliné PI1, cette première distance D1 définissant la hauteur d'un premier interstice de profilage 122. Toujours en vue du profilage du mélange caoutchouteux, le rouleau intermédiaire 114 et le rouleau inférieur 116 sont séparés par une seconde distance d1 dans le plan vertical PV1, cette seconde distance d1 définissant la hauteur d'un second interstice de profilage 124.

De préférence, la seconde distance d1 est inférieure à la première distance D1 afin de s'assurer que le mélange remplisse entièrement le second interstice 124 lors de la mise en œuvre du profilage avec la calandre 110.

En complément aux rouleaux, la calandre 110 comprend une paire d'oreilles supérieures 118 et une paire d'oreilles intermédiaires 120. Les oreilles supérieures 118 se situent aux extrémités transversales E112 et E114 des rouleaux supérieur 112 et intermédiaire 114, et les oreilles intermédiaires 120 se situent aux extrémités transversales E114 et E116 des rouleaux intermédiaire 114 et inférieur 116.

Lors du profilage, les oreilles supérieures 118 accompagnent le mélange caoutchouteux vers le premier interstice 122 sur le quart de la circonférence des rouleaux supérieur 112 et intermédiaire 114 située en amont de ce premier interstice 122, et les oreilles intermédiaires 120 accompagnent le mélange caoutchouteux vers le second interstice 124 sur le quart de la circonférence des rouleaux intermédiaire 114 et inférieur 116 située en amont de ce second interstice 124.

Afin d'accompagner le mélange caoutchouteux jusqu'au premier interstice de profilage 122, les oreilles supérieures 118 comprennent deux portées 126,128 en quart de cercle se rejoignant au niveau du premier interstice de profilage 122 et épousant respectivement les parois extérieures P112,P114 du rouleau supérieur 112 et du rouleau intermédiaire 114. Les deux portées 126,128 peuvent venir respectivement au contact, au jeu de fonctionnement près, ou non des parois extérieures P112 et P114 du rouleau supérieur 112 et du rouleau intermédiaire 114.

Afin d'accompagner le mélange caoutchouteux jusqu'au second interstice de profilage 124, les oreilles intermédiaires 120 comprennent deux portées 130,132 en quart de cercle se rejoignant au niveau du second interstice de profilage 124 et épousant respectivement les parois extérieures P114,P116 du rouleau intermédiaire 114 et du rouleau inférieur 116. De préférence, et afin de profiler au mieux le mélange caoutchouteux, les deux portées 130,132 de chacune des deux oreilles intermédiaires 120 viennent au contact, au jeu de fonctionnement près, des parois extérieures P114,P116 des rouleaux intermédiaire 114 et inférieur 116.

Dans une première variante, les oreilles intermédiaires 120 peuvent être monoblocs. Toutefois, pour faciliter la maintenance de ces oreilles intermédiaires 120 et les adapter facilement à des rouleaux ou des frettes de différents diamètres, chaque oreille intermédiaire 120 est divisée deux demi-oreilles : une demi-oreille supérieure 120S supportant la portée en quart de cercle supérieure 130 épousant la paroi extérieure P114 du rouleau intermédiaire 114, et une demi-oreille inférieure 120I supportant la portée en quart de cercle inférieure 132 épousant la paroi extérieure P116 du rouleau inférieur 116.

Toujours en vue d'améliorer le profilage du mélange caoutchouteux, l'invention prévoit que chaque extrémité transversale E114,E116 du rouleau intermédiaire 114 ou du rouleau inférieur 116 est équipée d'une frette 140 fixée sur ce rouleau. Cette frette 140 s'intercale entre ce rouleau 114,116 et la portée en quart de cercle 130,132 d'une oreille intermédiaire 120. Cette frette 140 permet d'augmenter le rayon du rouleau 114,116 d'une hauteur H égale, au jeu de fonctionnement près, à la seconde distance d1 séparant le rouleau intermédiaire 114 et le rouleau inférieur 116.

En tournant avec le cylindre sur lequel elles sont montées, les frettes 140 permettent d'améliorer l'aspect des bords latéraux du mélange profilé. Plus précisément, les frettes 140 permettent d'avoir une vitesse non nulle aux parois du mélange en cours de profilage au niveau du second interstice 122. Avantageusement, cette vitesse non nulle aux parois du mélange permet d'obtenir un profilé avec des bords latéraux réguliers dans son épaisseur et dans sa largeur, y compris si ce profilé est réalisé à partir d'un mélange n'ayant pas la malléabilité idéale pour subir un profilage sur une calandre à cylindres.

De préférence, c'est le rouleau intermédiaire 114 qui reçoit les frettes 140 à ses extrémités transversales E114.

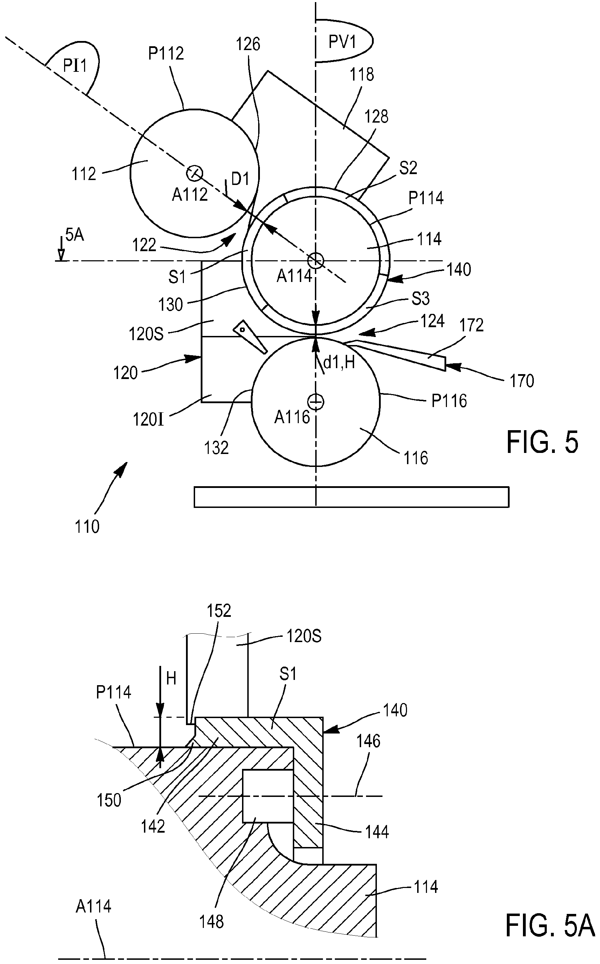

Dans une première variante préférée et illustrée par les figures 5 et 5A, chaque frette 140 est un élément rapporté sur un cylindre 114,116. A cet effet, chaque frette 140 comprend trois secteurs angulaires S1,S2,S3 rapportés sur les extrémités transversales E114,E116 du rouleau 114,116 sur lequel elle est montée. Cette première variante est avantageuse car les trois secteurs peuvent être changés lorsqu'ils sont usés.

A titre d'exemple, et comme le montre la figure 5A, chaque secteur S1,S2,S3 prend la forme d'une cornière comprenant une aile 142 à profil cylindrique s'intercalant entre le rouleau 114,116 et la portée 130,132 en quart de cercle d'une demi-oreille 120I,120S, et une aile annulaire 144 rapportée sur l'extrémité E114,E116 du rouleau 114,116 via des moyens de fixation 146, tels des vis, et un anneau d'étanchéité 148.

Avantageusement, l'aile 142 à profil cylindrique peut comprendre une lèvre 150 améliorant l'étanchéité entre la frette 140 et le rouleau 114,116. Afin d'améliorer l'étanchéité entre la frette 140 et une oreille intermédiaire 120, la portée 130,132 d'une demi-oreille 120S,120I peut comporter un épaulement 152 permettant à la demi-oreille 120S,120I de déborder sur l'aile 142 à profil cylindrique ou à l'aile 142 à profil cylindrique de pénétrer dans la demi-oreille 120S,120I.

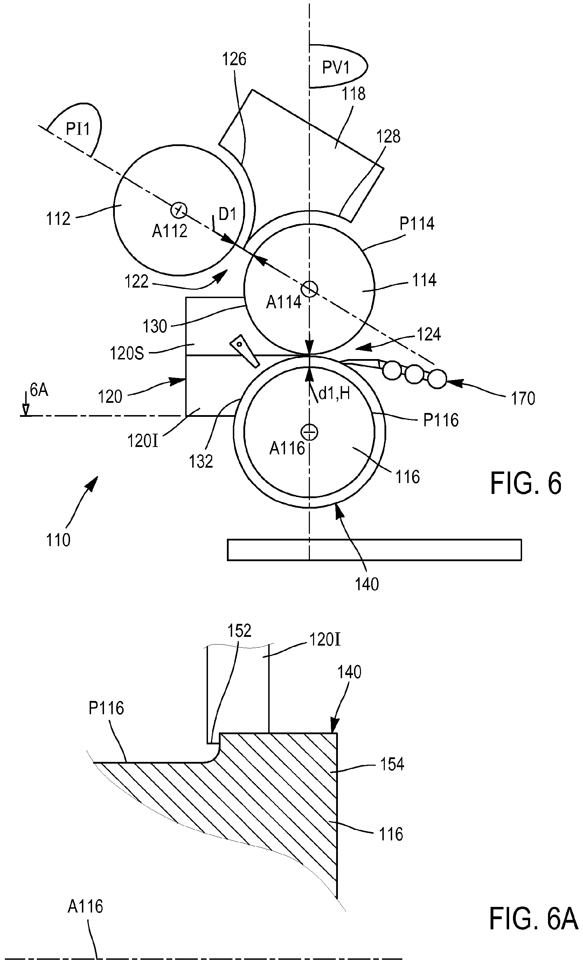

Dans une seconde variante illustrée par les figures 6 et 6A, chaque frette 140 prend la forme d'un épaulement 154 réalisé à une extrémité E114,E116 du rouleau 114,116 qu'elle équipe. Afin d'améliorer l'étanchéité entre la frette 140 et une oreille intermédiaire 120, la portée 130,132 d'une demi-oreille 120S,120I peut comporter un épaulement 152 permettant à la demi-oreille 120S,120I de déborder sur l'épaulement 154 du rouleau 114,116 ou à l'épaulement 154 du rouleau 114,116 de pénétrer dans la demi-oreille 120S,120I.

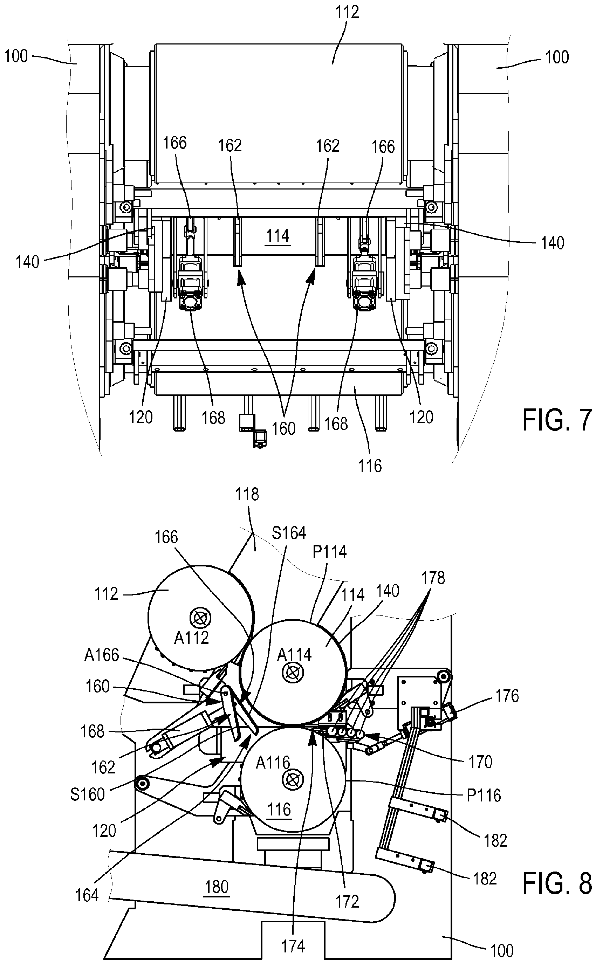

En vue de la formation et de la mesure d'un second bourrelet de mélange en amont du second interstice de profilage 124, la calandre 110 comprend des moyens de retenue 160 du mélange positionnés en amont de ce second interstice de profilage 124 et entre les oreilles intermédiaires 120, comme le montre la figure 7. Ces moyens de retenue 160 prennent habituellement la forme de deux doigts presseurs 162 prévus en face de la partie centrale du second interstice de profilage 124.

Afin d'améliorer le profilage du mélange effectué par les frettes 140 au niveau du second interstice 124, la calandre 110 comprend des moyens presseurs 164 du mélange positionnés en amont du second interstice de profilage 124, et intercalés entre les moyens de retenue centraux 160 et chaque frette 140 équipant une extrémité E114,E116 d'un rouleau 114,116.

Les moyens presseurs 164 prennent la forme de doigts 166 de forme aplatie, mobiles en rotation autour d'un axe A166 parallèle aux axes de rotation A112,A114,A116 des rouleaux 112,114,116 et mis en mouvement par un actionneur 168, comme le montre la figure 8.

En cours de profilage, la surface de pressage S164 des moyens presseurs 164 est plus proche de la paroi extérieure P114 du rouleau intermédiaire 114 que la surface de retenue S160 des moyens de retenue 160.

Les moyens presseurs 164 permettent de pousser le mélange le long des frettes 140 afin de garantir le gavage le long des frettes.

Un doigt 166 actionné par un vérin 168 est prévu au ras de chaque frette 140. Un doigt 166 peut venir au contact d'une frette 140 ou être légèrement décollé de la frette 140 pour faciliter son montage.

Lors du profilage, la position de chaque doigt 166 par rapport au rouleau intermédiaire 114 peut être pilotée manuellement ou automatiquement, et indépendamment ou non de la position de l'autre doigt 166.

Associés aux frettes 140, les moyens presseurs 164 permettent donc d'améliorer les aspects des bords latéraux du mélange profilé.

Afin de décoller le mélange profilé au plus tôt du rouleau inférieur 116 et d'éviter que le mélange profilé ne subisse des tensions susceptibles de conduire à des défauts de cohésion, la calandre 110 comprend une table de décollement 170 du mélange profilé positionnée en aval du second interstice de profilage 124.

Comme le montre la figure 8, la table 170 comprend au moins un racleur 172 dont l'extrémité affûtée 174 est maintenue en appui contre la paroi extérieure P116 du rouleau inférieur 116 par un actionneur 176, tel un vérin.

Plus précisément, l'extrémité affûtée 174 du racleur 172 vient au contact de la paroi extérieure P116 du rouleau inférieur 116 au plus près possible du second interstice de profilage 124.

Dans une variante illustrée en figure 5, la table 170 ne comprend qu'un racleur 172. Mais de préférence, la table 170 comprend des rouleaux 178 dans le prolongement du racleur 172. Ces rouleaux 178 facilitent l'évacuation et la tombée du mélange profilé vers le tapis d'évacuation 180 se situant sous le rouleau inférieur 116. Afin de faciliter l'évacuation et la tombée du mélange profilé vers le tapis d'évacuation 180, les rouleaux 178 sont agencés de manière à former une pente descendante vers le tapis d'évacuation 180.

Toujours de préférence, et afin de décoller rapidement le mélange profilé du racleur 172 et d'éviter un bourrage, le premier rouleau 178 se situant dans le prolongement du racleur 172 a un diamètre plus important que le diamètre des autres rouleaux 178.

Afin de réguler la vitesse du tapis d'évacuation 180 du mélange profilé et de laisser le mélange profilé gonfler librement et réduire sa vitesse librement, la calandre 110 comprend au moins un, et de préférence deux, capteur de mesure 182 de la distance entre le mélange profilé tombant depuis la table de décollement 170 et la paroi extérieure P116 du rouleau inférieur 116.

La table de décollement 170 permet donc d'améliorer la cohésion du mélange profilé en sortie de la calandre, et donc d'éviter des déchirements des bandes découpées dans ce profilé lorsque ces bandes sont empilées et repliées sur elles-mêmes en vue de leur stockage et/ou de leur transport vers un site de fabrication d'enveloppes de pneumatiques, et lorsque ces bandes sont désempilées.

Toutefois, associée aux capteurs 182 permettant de réguler la vitesse du tapis d'évacuation 180 et aux frettes 140 et aux doigts 166, la table 170 participe aussi à l'amélioration de l'aspect des bords latéraux du mélange profilé en sortie de la calandre 110.

## Revendications

1. Calandre (110) de profilage d'un mélange caoutchouteux destiné à la fabrication d'enveloppes de pneumatique, la calandre (110) comprenant trois rouleaux rotatifs disposés de façon que l'axe de rotation (A112) du rouleau supérieur (112) se situe au-dessus de l'axe de rotation (A114) du rouleau intermédiaire (114) et de façon que l'axe de rotation (A114) du rouleau intermédiaire se situe au-dessus de l'axe de rotation (A116) du rouleau inférieur (116), ces trois axes de rotation (A112,A114,A116) étant parallèles, l'axe de rotation (A116) du rouleau inférieur (116) et l'axe de rotation (A114) du rouleau intermédiaire (114) se situant dans un même plan vertical (PV1), l'axe de rotation (A112) du rouleau supérieur (112) se situant dans un plan incliné (PI1) par rapport au plan vertical (PV1), le rouleau supérieur (112) et le rouleau intermédiaire (114) étant séparés par une première distance (D1) dans le plan incliné (PI1), cette première distance (D1) définissant la hauteur d'un premier interstice de profilage (122), le rouleau intermédiaire (114) et le rouleau inférieur (116) étant séparés par une seconde distance (d1) dans le plan vertical (PV1), cette seconde distance (d1) définissant la hauteur d'un second interstice de profilage (124), la calandre (110) comprenant une paire d'oreilles supérieures (118) et une paire d'oreilles intermédiaires (120), les oreilles supérieures (118) se situant aux extrémités transversales des rouleaux supérieur (112) et intermédiaire (114), et les oreilles intermédiaires (120) se situant aux extrémités transversales des rouleaux intermédiaire (114) et inférieur (116), les oreilles supérieures (118) comprenant deux portées (126,128) en quart de cercle se rejoignant au niveau du premier interstice de profilage (122) et épousant respectivement les parois extérieures (P112,P114) du rouleau supérieur (112) et du rouleau intermédiaire (114), et les oreilles intermédiaires (120) comprenant deux portées (130,132) en quart de cercle se rejoignant au niveau du second interstice de profilage (124) et épousant respectivement les parois extérieures (P114,P116) du rouleau intermédiaire (114) et du rouleau inférieur (116), la calandre (110) étant **caractérisée en ce que** chaque extrémité transversale (E114,E116) du rouleau intermédiaire (114) ou du rouleau inférieur (116) est équipée d'une frette (140) fixée sur ce rouleau, s'intercalant entre ce rouleau (114,116) et la portée en quart de cercle (130,132) d'une oreille intermédiaire (120), et permettant d'augmenter le rayon du rouleau (114,116) d'une hauteur (H) égale, au jeu de fonctionnement près, à la seconde distance (d1) séparant le rouleau intermédiaire (114) et le rouleau inférieur (116).

2. Calandre (110) de profilage selon la revendication 1, dans laquelle le rouleau intermédiaire (114) reçoit les frettes (140) à ses extrémités transversales (E114).

3. Calandre (110) de profilage selon la revendication 1 ou la revendication 2, dans laquelle chaque frette (140) comprend trois secteurs angulaires (S1,S2,S3) rapportés sur les extrémités transversales (E114,E116) du rouleau (114,116) sur lequel elle est montée.

4. Calandre (110) de profilage selon la revendication 1 ou la revendication 2, dans laquelle chaque frette (140) prend la forme d'un épaulement (154) réalisé à une extrémité (E114,E116) du rouleau (114,116) qu'elle équipe.

5. Calandre (110) de profilage selon l'une des revendications précédentes, dans laquelle chaque oreille intermédiaire (120) est divisée en deux demi-oreilles, une demi-oreille supérieure (120S) supportant la portée en quart de cercle supérieure (130) épousant la paroi extérieure (P114) du rouleau intermédiaire (114), et une demi-oreille inférieure (120I) supportant la portée en quart de cercle inférieure (132) épousant la paroi extérieure (P116) du rouleau inférieur (116).

6. Calandre (110) de profilage selon l'une des revendications précédentes, comprenant des moyens de retenue (160) du mélange positionnés en amont du second interstice de profilage (124), en face de la partie centrale de ce second interstice de profilage (124) et entre les oreilles intermédiaires (120), et dans laquelle la calandre (110) comprend des moyens presseurs (164) du mélange positionnés en amont du second interstice de profilage (124), et intercalés entre les moyens de retenue centraux (160) et chaque frette (140) équipant une extrémité (E114,E116) d'un rouleau (114,116).

7. Calandre (110) de profilage selon la revendication 6, dans laquelle les moyens presseurs (164) prennent la forme de doigts (166) de forme aplatie, mobiles en rotation autour d'un axe (A166) parallèle aux axes de rotation (A112,A114,A116) des rouleaux (112,114,116) et mis en mouvement par un actionneur (168).

8. Calandre (110) de profilage selon la revendication 6 ou la revendication 7, dans laquelle, en cours de profilage, la surface de pressage (S164) des moyens presseurs (164) est plus proche de la paroi extérieure (P114) du rouleau intermédiaire (114) que la surface de retenue (S160) des moyens de retenue (160).

9. Calandre (110) de profilage selon l'une des revendications précédentes, comprenant en outre une table de décollement (170) du mélange profilé positionné en aval du second interstice de profilage (124).

## Patentansprüche

1. Kalander (110) zum Profilieren einer zur Herstellung von Reifendecken bestimmten Kautschukmischung, wobei der Kalander (110) drei Drehwalzen umfasst, die so angeordnet sind, dass sich die Rotationsachse (A112) der oberen Walze (112) über der Rotationsachse (A114) der zwischenliegenden Walze (114) befindet, und so, dass sich die Rotationsachse (A114) der zwischenliegenden Walze über der Rotationsachse (A116) der unteren Walze (116) befindet, wobei diese drei Rotationsachsen (A112, A114, A116) parallel sind, wobei sich die Rotationsachse (A116) der unteren Walze (116) und die Rotationsachse (A114) der zwischenliegenden Walze (114) in derselben vertikalen Ebene (PV1) befinden, wobei sich die Rotationsachse (A112) der oberen Walze (112) in einer Ebene (PI1) befindet, die bezüglich der vertikalen Ebene (PV1) geneigt ist, wobei die obere Walze (112) und die zwischenliegende Walze (114) über einen ersten Abstand (D1) in der geneigten Ebene (PI1) getrennt sind, wobei dieser erste Abstand (D1) die Höhe eines ersten Profilspalts (122) definiert, wobei die zwischenliegende Walze (114) und die untere Walze (116) über einen zweiten Abstand (d1) in der vertikalen Ebene (PV1) getrennt sind, wobei dieser zweite Abstand (d1) die Höhe eines zweiten Profilspalts (124) definiert, wobei der Kalander (110) ein Paar obere Lappen (118) und ein Paar zwischenliegender Lappen (120) umfasst, wobei sich die oberen Lappen (118) an den Querenden der oberen (112) und der zwischenliegenden Walze (114) befinden und sich die zwischenliegenden Lappen (120) an den Querenden der zwischenliegenden (114) und der unteren Walze (116) befinden, wobei die oberen Lappen (118) zwei Kreisquadrant-Auflageflächen (126, 128) umfassen, die an dem ersten Profilspalt (122) zusammenlaufen und sich jeweils an die Außenwände (P112, P114) der oberen Walze (112) und der zwischenliegenden Walze (114) anschmiegen, und die zwischenliegenden Lappen (120) zwei Kreisquadrant-Auflageflächen (130, 132) umfassen, die an dem zweiten Profilspalt (124) zusammenlaufen und sich jeweils an die Außenwände (P114, P116) der der zwischenliegenden Walze (114) und der unteren Walze (116) anschmiegen, wobei der Kalander (110) **dadurch gekennzeichnet ist, dass** jedes Querende (E114, E116) der zwischenliegenden Walze (114) oder der unteren Walze (116) mit einer Bandage (140) versehen ist, die auf dieser Walze befestigt ist, zwischen dieser Walze (114, 116) und der Kreisquadrant-Auflagefläche (130, 132) eines zwischenliegenden Lappens (120) liegt und es gestattet, den Radius der Walze (114, 116) um eine Höhe (H) zu vergrößern, die bis auf das Betriebsspiel gleich dem zweiten Abstand (d1) ist, der die zwischenliegende Walze (114) von der unteren Walze (116) trennt.

2. Profilkalander (110) nach Anspruch 1, wobei die zwischenliegende Walze (114) die Bandagen (140) an ihren Querenden (E114) aufnimmt.

3. Profilkalander (110) nach Anspruch 1 oder Anspruch 2, wobei jede Bandage (140) drei Winkelbereiche (S1, S2, S3) umfasst, die an den Querenden (E114, E116) der Walze (114, 116) angebracht sind, an der sie montiert ist.

4. Profilkalander (110) nach Anspruch 1 oder Anspruch 2, wobei jede Bandage (140) die Form eines Absatzes (154) hat, der an einem Ende (E114, E116) der Walze (114, 116) ausgeführt ist, an der sie vorgesehen ist.

5. Profilkalander (110) nach einem der vorhergehenden Ansprüche, wobei jeder zwischenliegende Lappen (120) in zwei Halblappen unterteilt ist, wobei ein oberer Halblappen (120S) die Kreisquadrant-Auflagefläche (130) stützt, die sich an die Außenwand (P114) der zwischenliegenden Walze (114) anschmiegt, und ein unterer Halblappen (120I) die Kreisquadrant-Auflagefläche (132) stützt, die sich an die Außenwand (P116) der unteren Walze (116) anschmiegt.

6. Profilkalander (110) nach einem der vorhergehenden Ansprüche, umfassend Mittel (160) zum Halten der Mischung, die stromaufwärts von dem zweiten Profilspalt (124), gegenüber dem mittleren Teil dieses zweiten Profilspalts (124) und zwischen den zwischenliegenden Lappen (120) positioniert ist, und wobei der Kalander (110) Mittel (164) zum Pressen der Mischung umfasst, die stromaufwärts von dem zweiten Profilspalt (124) positioniert sind und zwischen den mittleren Haltemitteln (160) und jeder Bandage (140) liegen, mit der ein Ende (E114, E116) einer Walze (114, 116) versehen ist.

7. Profilkalander (110) nach Anspruch 6, wobei die Pressermittel (164) die Form von abgeflachten Fingern (166) haben, die um eine parallel zu den Rotationsachsen (A112, A114, A116) der Walzen (112, 114, 116) verlaufende Achse (A166) drehbeweglich sind und durch einen Aktuator (168) in Bewegung gesetzt werden.

8. Profilkalander (110) nach Anspruch 6 oder Anspruch 7, wobei die Pressfläche (S164) der Pressermittel (164) im Laufe der Profilierung der Außenwand (P114) der zwischenliegenden Walze (114) näher liegt als die Haltefläche (S160) der Haltemittel (160).

9. Profilkalander (110) nach einem der vorhergehenden Ansprüche, ferner umfassend einen Tisch (170) zum Ablösen der profilierten Mischung, die stromabwärts von dem zweiten Profilspalt (124) positioniert ist.

## Claims

1. Calender (110) for profiling a rubber mixture intended for the manufacture of tyre casings, the calender (110) comprising three rotating rolls arranged such that the axis of rotation (A112) of the upper roll (112) is situated above the axis of rotation (A114) of the intermediate roll (114) and such that the axis of rotation (A114) of the intermediate roll is situated above the axis of rotation (A116) of the lower roll (116), these three axes of rotation (A112,A114,A116) being parallel, the axis of rotation (A116) of the lower roll (116) and the axis of rotation (A114) of the intermediate roll (114) being situated in the same vertical plane (PV1), the axis of rotation (A112) of the upper roll (112) being situated in a plane (PI1) inclined with respect to the vertical plane (PV1), the upper roll (112) and the intermediate roll (114) being separated by a first distance (D1) in the inclined plane (PI1), this first distance (D1) defining the height of a first profiling nip (122), the intermediate roll (114) and the lower roll (116) being separated by a second distance (d1) in the vertical plane (PV1), this second distance (d1) defining the height of a second profiling nip (124), the calender (110) comprising a pair of upper lugs (118) and a pair of intermediate lugs (120), the upper lugs (118) being situated at the transverse ends of the upper (112) and intermediate (114) rolls, and the intermediate lugs (120) being situated at the transverse ends of the intermediate (114) and lower (116) rolls, the upper lugs (118) comprising two quarter-circle bearing surfaces (126,128) meeting at the first profiling nip (122) and respectively following the shape of the outer walls (P112,P114) of the upper roll (112) and of the intermediate roll (114), and the intermediate lugs (120) comprising two quarter-circle bearing surfaces (130,132) meeting at the second profiling nip (124) and respectively following the shape of the outer walls (P114,P116) of the intermediate roll (114) and of the lower roll (116), the calender (110) being **characterized in that** each transverse end (E114,E116) of the intermediate roll (114) or of the lower roll (116) is equipped with a collar (140) fastened to this roll and inserted between this roll (114,116) and the quarter-circle bearing surface (130,132) of an intermediate lug (120), and making it possible to increase the radius of the roll (114,116) by a height (H) equal, to within the operating clearance, to the second distance (d1) separating the intermediate roll (114) and the lower roll (116).

2. Profiling calender (110) according to Claim 1, wherein the intermediate roll (114) receives the collars (140) at its transverse ends (E114).

3. Profiling calender (110) according to Claim 1 or Claim 2, wherein each collar (140) comprises three angular sectors (S1, S2, S3) attached to the transverse ends (E114, E116) of the roll (114,116) on which said collar is mounted.

4. Profiling calender (110) according to Claim 1 or Claim 2, wherein each collar (140) takes the form of a shoulder (154) produced at an end (E114, E116) of the roll (114, 116) which said collar equips.

5. Profiling calender (110) according to one of the preceding claims, in which each intermediate lug (120) is divided into two half-lugs, an upper half-lug (120S) supporting the upper quarter-circle bearing surface (130) forming the shape of the outer wall (P114) of the intermediate roll (114), and a lower half-lug (1201) supporting the lower quarter-circle bearing surface (132) following the shape of the outer wall (P116) of the lower roll (116).

6. Profiling calender (110) according to one of the preceding claims, comprising means (160) for retaining the mixture that are positioned upstream of the second profiling nip (124), opposite the central part of this second profiling nip (124) and between the intermediate lugs (120), and wherein the calender (110) comprises means (164) for pressing the mixture that are positioned upstream of the second profiling nip (124) and inserted between the central retaining means (160) and each collar (140) equipping an end (E114, E116) of a roll (114, 116).

7. Profiling calender (110) according to Claim 6, wherein the pressing means (164) take the form of fingers (166) of flattened shape that are rotatable about an axis (A166) parallel to the axes of rotation (A112, A114, A116) of the rolls (112, 114, 116) and set in motion by an actuator (168).

8. Profiling calender (110) according to Claim 6 or Claim 7, wherein, during profiling, the pressing surface (S164) of the pressing means (164) is closer to the outer wall (P114) of the intermediate roll (114) than the retaining surface (S160) of the retaining means (160).

9. Profiling calender (110) according to one of the preceding claims, additionally comprising a table (170) for separating the profiled mixture positioned downstream of the second profiling nip (124).
